# EUROPEAN PATENT SPECIFICATION

(11) **EP 1 640 783 B1**
(45) Date of publication and mention of the grant of the patent: **19.03.2008**
(21) Application number: 05108540.5
(22) Date of filing: 16.09.2005
(51) Int. Cl.: G02B 27/18, H04N 9/31, H04N 5/74, G03B 21/28, G02B 17/08

(54) **Optical projection system for an image display apparatus**
Optisches Projektionssystem für eine Bildanzeigevorrichtung
Système de projection optique pour un dispositif d'affichage d'images

(30) Priority: 24.09.2004 KR 2004077374
(43) Date of publication of application: 29.03.2006
(73) Proprietor: Samsung Electronics Co., Ltd, Suwon-si, Gyeonggi-do 442-742 (KR)
(72) Inventor: Cho, Kun-ho, Gyeonggi-do (KR); Borodouline, Alexei, Gyeonggi-do (KR); Sokolov, Kirill, Gyeonggi-do (KR)
(74) Representative: Read, Matthew Charles

(56) References cited:
- WO-A-98/08141
- US-A1- 2001 050 758
- US-A1- 2004 032 653
- US-A1- 2004 156 117
- US-A1- 2005 174 545
- PATENT ABSTRACTS OF JAPAN vol. 1997, no. 09, 30 September 1997 (1997-09-30) -& JP 09 138349 A (SEMICONDUCTOR ENERGY LAB CO LTD), 27 May 1997 (1997-05-27)
- PATENT ABSTRACTS OF JAPAN vol. 2000, no. 12, 3 January 2001 (2001-01-03) -& JP 2000 250131 A (LG ELECTRONICS INC), 14 September 2000 (2000-09-14)

## Description

The invention relates to an optical projection system and, more particularly, to an optical projection system that projects an image produced by a display onto a screen with a wide viewing angle and provides improved image quality by correcting distortions caused by the wide viewing angle projection and an image display apparatus employing the same.

An image display apparatus includes a display, which controls a light source to provide illumination for a plurality of pixels to create a color image, and an optical projection system that enlarges and projects the color image onto a screen. In response to an increasing demand, research has been conducted with the aim of providing an image display apparatus having a large screen, high resolution and a relatively slim configuration.

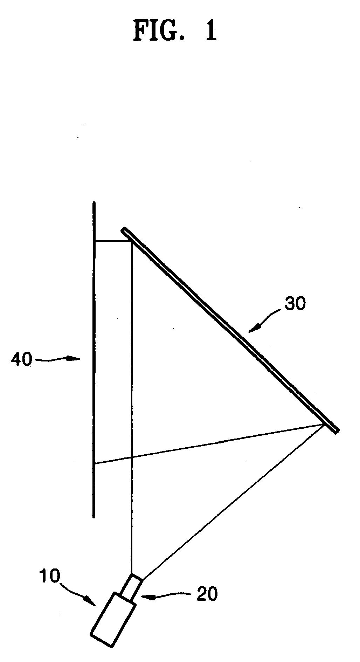

In order to enable an image display apparatus to have a slim configuration, the optical projection system generates a bundle of light rays at a wide viewing angle. However, when the optical projection system is located at a center of the screen, the viewing angle of the bundle of projected light rays generated by the optical projection system can only be increased to by a limited amount. Figure 1 is a schematic illustration of a conventional image display apparatus. Referring to Figure 1, in order to increase the viewing angle of a bundle of light rays generated by an optical projection system 20, the optical projection system 20 is arranged so that the light rays are incident on a lower portion of a screen 40 at an oblique angle. An image produced by an optical engine 10 is enlarged and projected by the optical projection system 20 and is incident on a reflective mirror 30. The image reflected from the reflective mirror 30 is projected onto the screen 40.

When the image that emanates from the optical projection system 20 is reflected onto the screen 40 by the reflective mirror 30 as described above, it must be diffused at a very large angle, since the thickness of the image display apparatus is small. However, a portion of the image that is projected at a wide angle by the optical projection system 20 onto the lower portion of the screen 40 tends to undergo distortion, which can degrade the image quality. Thus, it is technically difficult to provide an image display apparatus with a large screen and a high image quality that has a slim design.

US 2001 /0050758 A1 discloses a prior image display device in which a refracting optical lens is used to introduce a barrel distortion in an image, prior to its reflection by a convex mirror, and its projection. The device is configured so that the barrel distortion introduced by the lens compensates for a pincushion distortion generated by the mirror.

An object of the present invention is to facilitate the provision of a slim optical projection system for an image display apparatus that can project an image at a wide viewing angle and provide improved image quality by correcting distortions caused by the wide viewing angle projection.

According to the invention there is provided an optical projection

system according to claim 1, an image display apparatus according to claim 12 and a method of projecting an optical image according to claim 20.

The use of a reflector permits an image display apparatus comprising the optical projection system to be of a slim design, while the compensation of the second distortions arising from the use of the reflector can ensure that a high quality image having a wide viewing angle is produced.

The reflector may be an aspherical mirror and have a negative refractive power.

The optical projection system may further include first and second optical path changers to change optical paths between the relay lens group and the projection lens group and between the projection lens group and the reflector, respectively. While an optical axis of the display can be coaxial with optical axes of the relay lens group and the projection lens group, an optical axis of the reflector is offset from the optical axis of the display. The first and second distortions may be spool distortions and the third distortion caused by the reflector may be a barrel distortion.

Embodiments of the invention will now be described with reference to the accompanying drawings, of which:
Figure 1 schematically illustrates a conventional image display apparatus;
Figure 2 schematically illustrates an image display apparatus according to an embodiment of the present invention;
Figure 3 illustrates an optical projection system according to an embodiment of the present invention;
Figure 4 illustrates an optical projection system according to another embodiment of the present invention;
Figure 5 illustrates a distribution of light spots for each field position exhibited by an image display apparatus according to an embodiment of the present invention; and
Figure 6 illustrates distortions of an image exhibited by an image display apparatus according to an embodiment of the present invention.

In the following description of example embodiments of the invention, reference will be made to the accompanying drawings, in which like reference numerals refer to the like elements throughout.

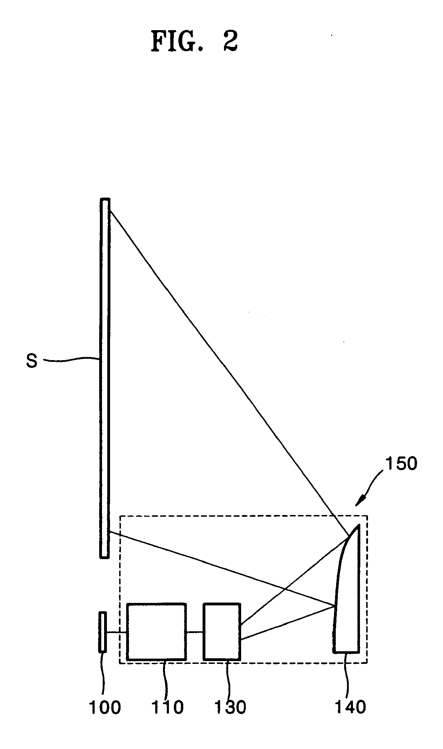

Referring to Figure 2, an image display apparatus includes an optical projection system 150 comprising a relay lens group 110 to produce an intermediate image from an image created by a display device 100, a projection lens group 130 to enlarge and project the intermediate image that produced by the relay lens group 110, and a reflector 140 to enlarge and reflect the image received from the projection lens group 130 onto a screen S.

The display device 100 produces an image by modulating a received beam according to image information received from an image information input (not shown). Examples of suitable display devices 100 include a digital micromirror device (DMD) display, a liquid crystal display (LCD), a grating light valve (GLV) display or a liquid crystal on silicon (LCOS) display. A DMD display is a two-dimensional array of micromirrors that spatially modulate the intensity of light incident thereon in order to produce an image.

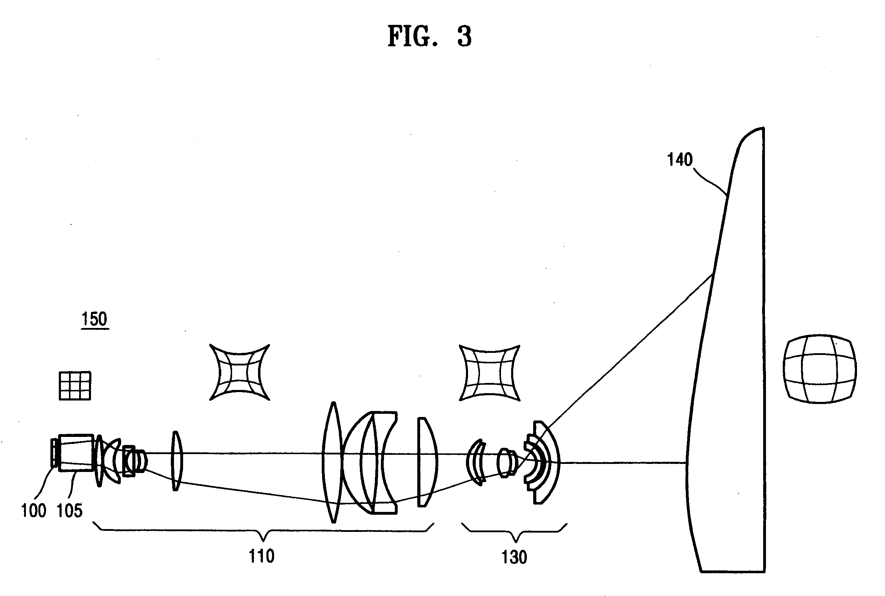

Figure 3 illustrates an arrangement of optical elements in the optical projection system 150 according to an embodiment of the invention. Referring to Figure 3, the optical projection system 150 includes a total reflection prism 105 that is disposed between the display device 100 and the relay lens group 110 and allows a beam to be incident on the display device 100 and reflects the image produced by the display device 100 to the relay lens group 110.

The projection lens group 130 enlarges and projects the intermediate image produced by the relay lens group 110 onto the reflector 140. The reflector 140 further enlarges the image received from the projection lens group 130 and projects the enlarged image onto the screen S. The reflector 140 may be a flat mirror or an aspherical mirror made of a reflective material, such as plastic, having a negative refractive power so as to diffuse and enlarge the image received from the projection lens group 130. Since image is enlarged and projected by both the projection lens group 130 and the reflector 140, an image having an ultra-wide viewing angle can be produced.

The relay lens group 110 includes at least one lens and generates a first distortion in the intermediate image. The projection lens group 130 also includes at least one lens and generates a second distortion in the intermediate image received from the relay lens group 110. The relay lens group 110 and projection lens group 130 are configured so that the combination of the first and second distortions compensates for a third distortion of the image, which is caused by its reflection by the reflector 140. In other words, a predistortion is induced by the relay lens group 110 and the projection lens group 130 to offset a subsequent distortion caused by the reflector 140.

In the optical projection system of Figure 3, the optical axes of the relay lens group 110 and the projection lens group 130 are coaxial with an optical axis of the display device 100, while an optical axis of the reflector 140 is offset from the optical axis of the display device 100.

In the arrangement of Figure 3, the reflector 140 causes a barrel distortion in the image. In order to compensate for this barrel distortion, the relay lens group 110 and the projection lens group 130 produce spool distortions. As a result, the image reflected from the reflector 140 onto the screen S has a high visual quality and little distortion.

In summary, in order to achieve a wide viewing angle, the optical projection system 150 includes a refractive optical system, such as the projection lens group 130, and a reflective optical system, such as the reflector 140, and induces the first and second distortions, respectively generated by the relay lens group 110 and the projection lens group 130, to correct the third distortion, which is caused by the reflective optical system.

Through using the refractive and reflective optical systems 130, 140 efficiently, the optical projection system 150 can produce images having a wide viewing angle, while permitting the image display apparatus to be of a slim design.

In order to further reduce the thickness of the image display apparatus, the optical projection system 150 may further include at least one optical path changer, disposed in an optical path of light exiting the display device 100, to bend the optical path. The optical path changer may be a mirror member, reflector, a refractor or a total reflection prism.

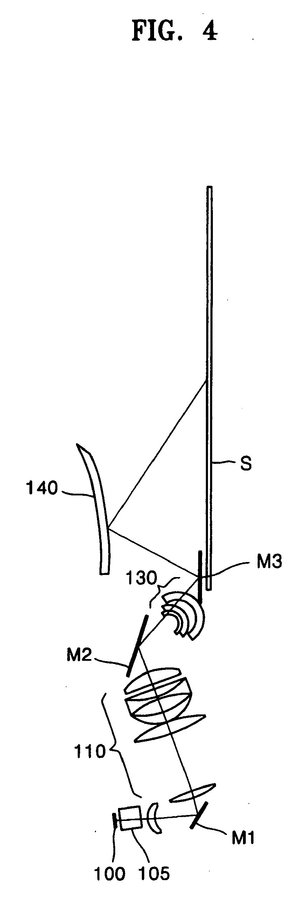

Figure 4 illustrates an optical projection system according to another embodiment of the invention, in which the optical projection system further includes a first optical path changer M1 disposed within the relay lens group 110, a second optical path changer M2 disposed between the relay lens group 110 and the projection lens group 130, and a third optical path changer M3 disposed between the projection lens group 130 and the reflector 140. Here, the first, second, and third optical path changers M1, M2, and M3 may be arranged in a variety of different manners according to structure and size of the image display apparatus, as long as propagation of light is not impeded.

Detailed design data of the optical projection system according to various embodiments of the invention is as follows. It should be understood that this detailed design data is merely exemplary and is not intended to limit the scope of the invention.

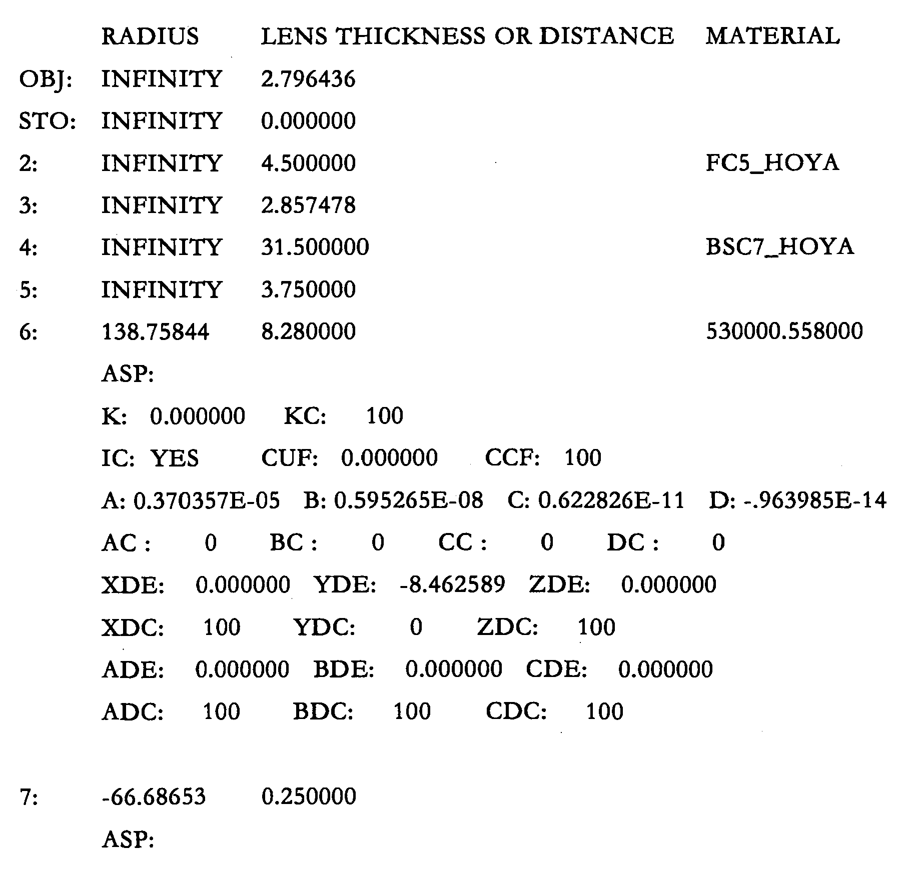

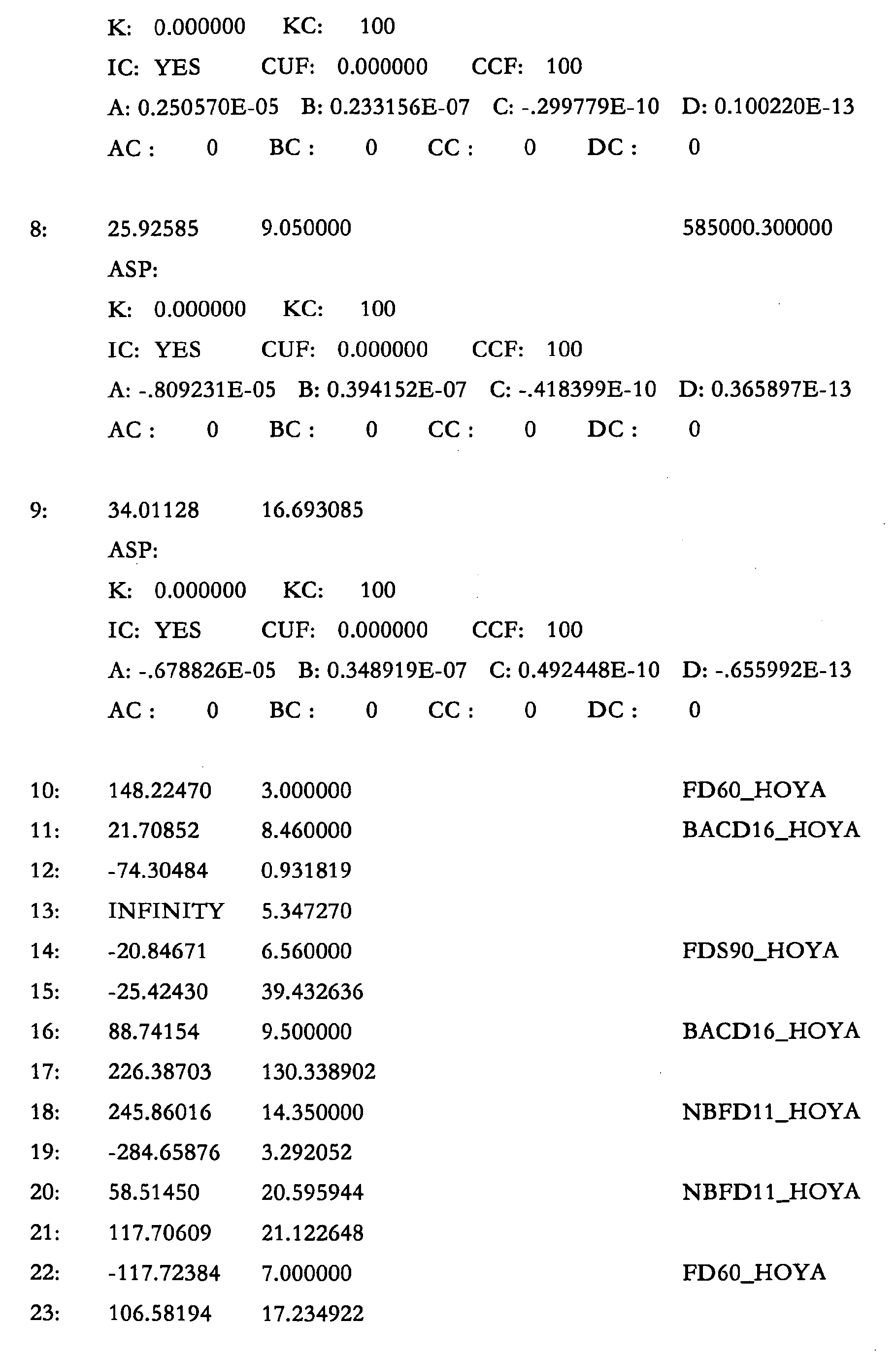

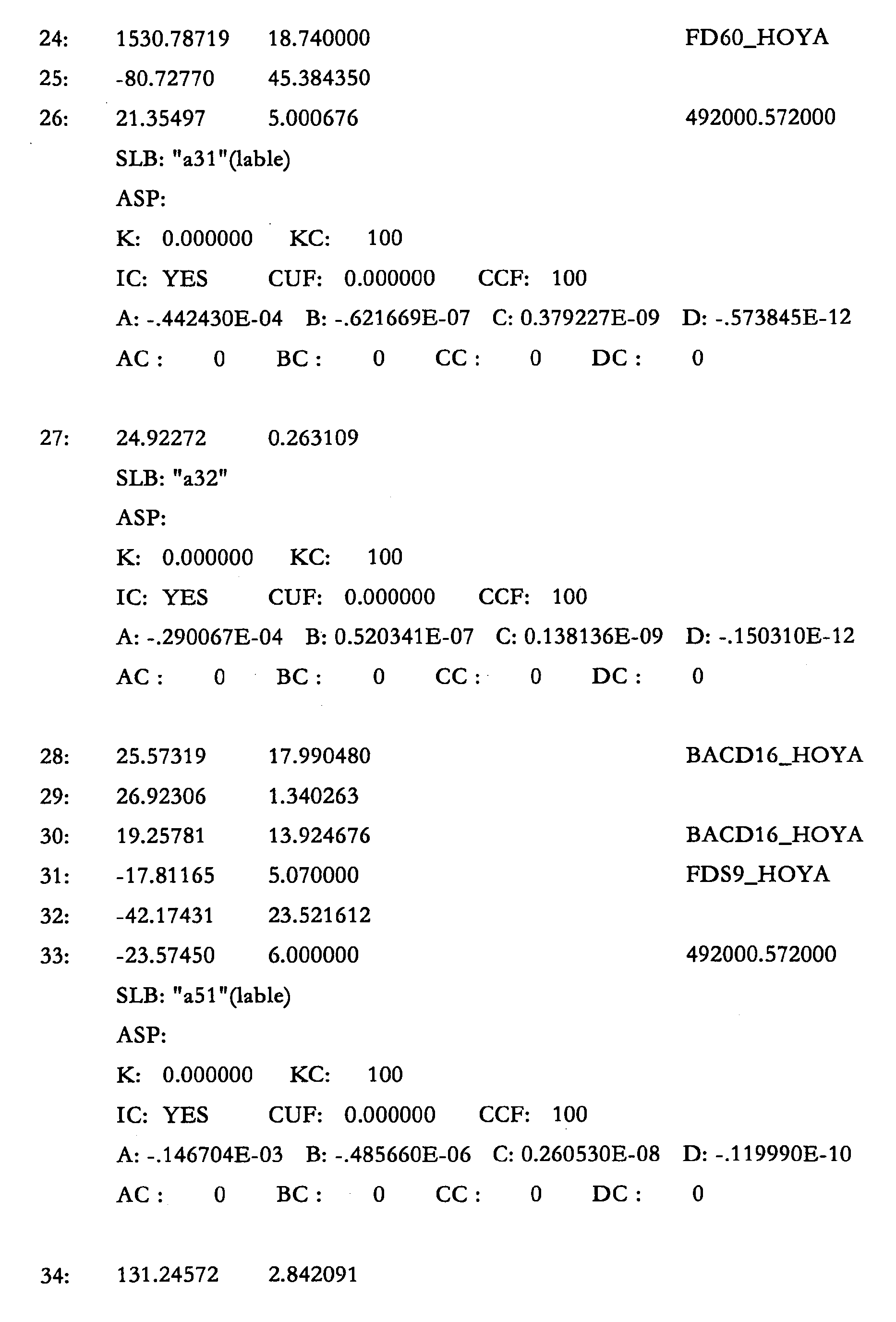

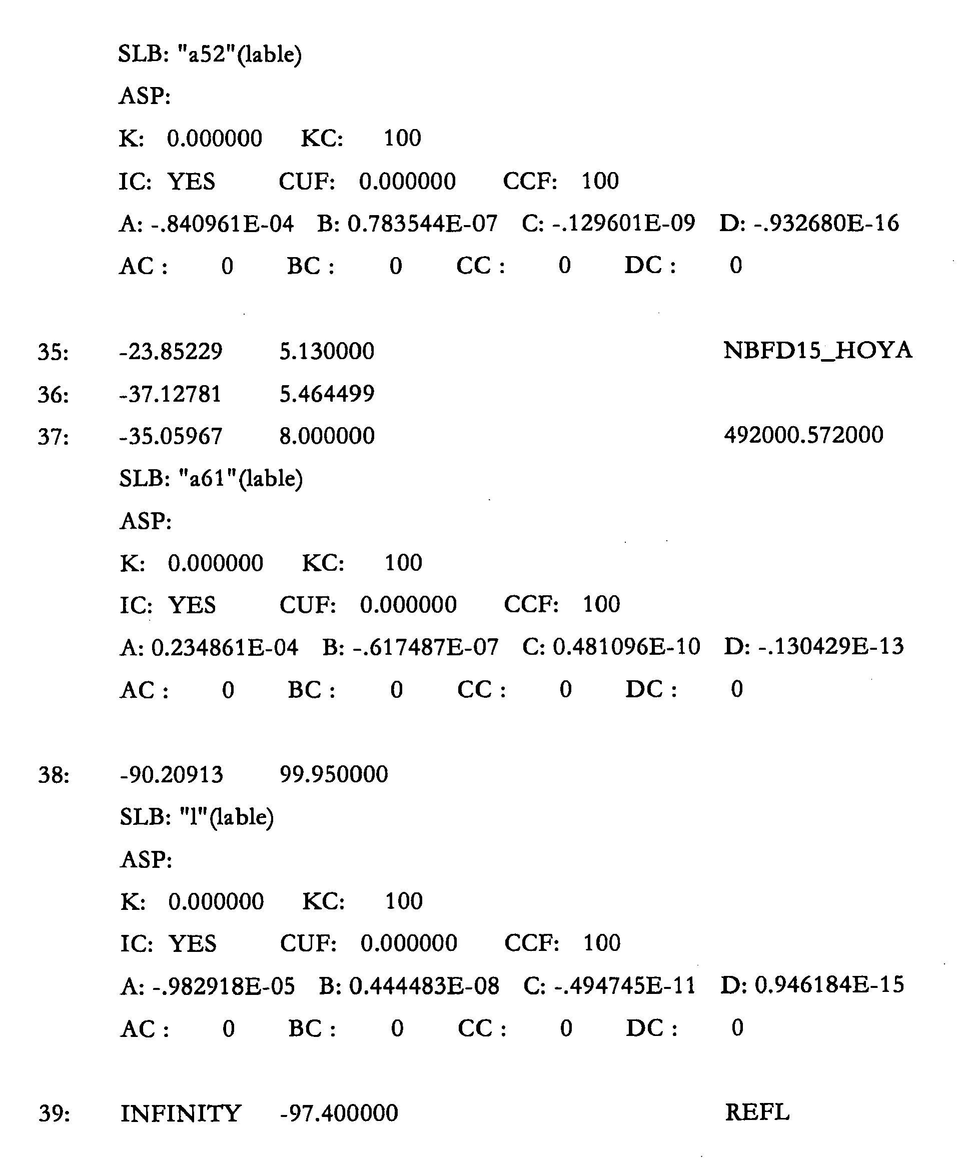

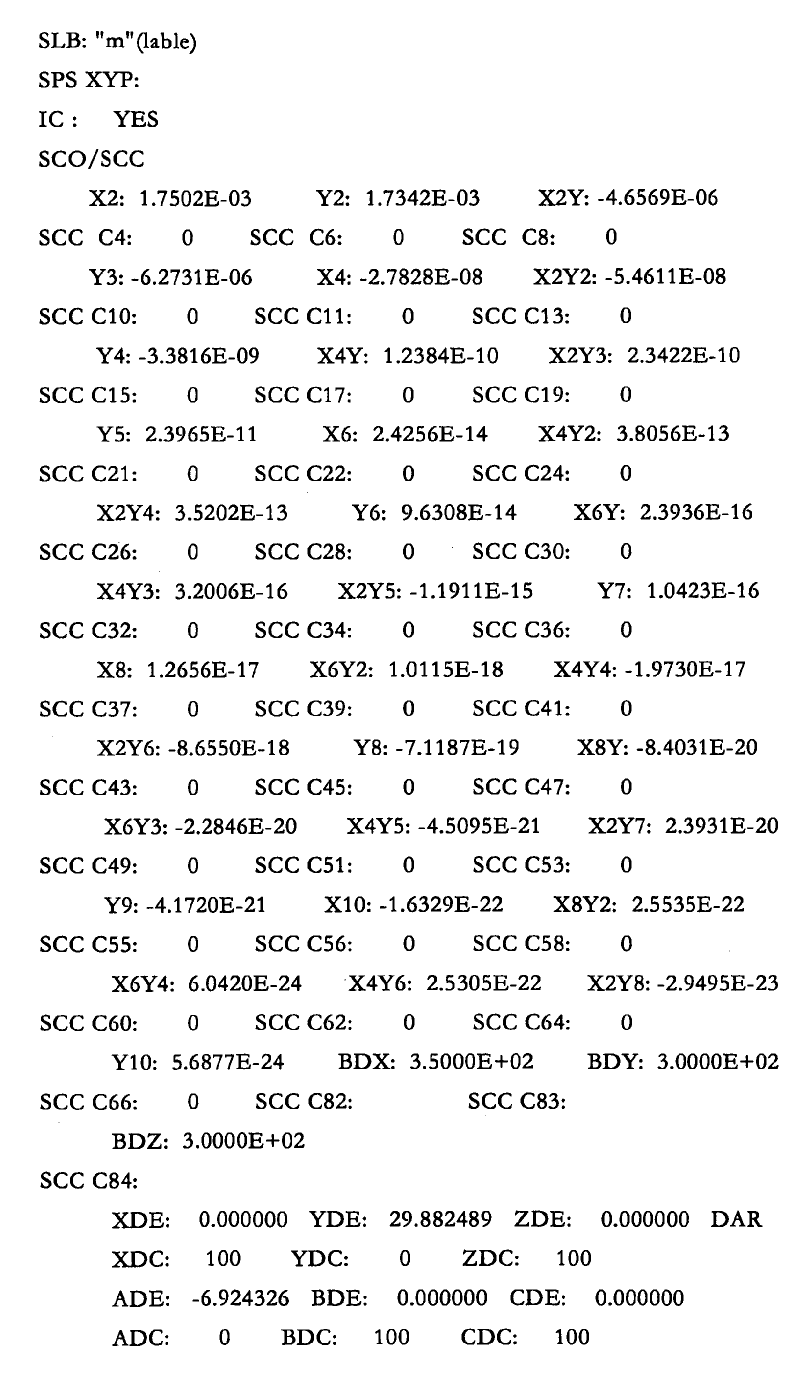

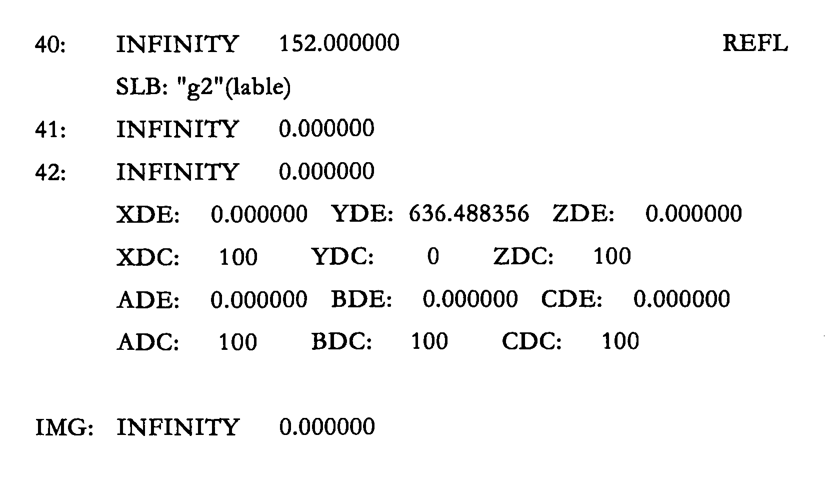

### SPECIFICATION DATA

| | | | | | |
|---|---|---|---|---|---|
| NAO | 0.20000 | | | | |
| DIM | MM | | | | |
| WL | 632.80 | 546.07 | 460.00 | | |
| REF | 2 | | | | |
| WTW | 1 | 1 | 1 | | |
| XOB | 0.00000 | 8.86000 | 4.43000 | 8.86000 | 4.43000 |
| | 0.00000 | 6.64000 | 4.43000 | 8.86000 | 0.00000 |
| | 6.64000 | | | | |
| YOB | 0.00000 | 0.00000 | 0.00000 | -4.98000 | -4.98000 |
| | -4.98000 | -3.32000 | 4.98000 | 4.98000 | 4.98000 |
| | 3.32000 | | | | |
| WTF | 1.00000 | 1.00000 | 1.00000 | 1.00000 | 1.00000 |
| | 100.00000 | 1.00000 | 1.00000 | 1.00000 | 1.00000 |
| | 1.00000 | | | | |
| VUX | 0.00000 | 0.00000 | 0.00000 | 0.00000 | 0.00000 |
| | 0.00000 | 0.00000 | 0.00000 | 0.00000 | 0.00000 |
| | 0.00000 | | | | |
| VLX | 0.00000 | 0.00000 | 0.00000 | 0.00000 | 0.00000 |
| | 0.00000 | 0.00000 | 0.00000 | 0.00000 | 0.00000 |
| | 0.00000 | | | | |
| VUY | 0.00000 | 0.00000 | 0.00000 | 0.00000 | 0.00000 |
| | 0.00000 | 0.00000 | 0.00000 | 0.00000 | 0.00000 |
| | 0.00000 | | | | |
| VLY | 0.00000 | 0.00000 | 0.00000 | 0.00000 | 0.00000 |
| | 0.00000 | 0.00000 | 0.00000 | 0.00000 | 0.00000 |
| | 0.00000 | | | | |

### APERTURE DATA/EDGE DEFINITIONS

| | |
|---|---|
| CA | |
| | APERTURE data not specified for surface Obj thru 43 |

### REFRACTIVE INDICES

| | | | |
|---|---|---|---|
| GLASS CODE | 632.80 | 546.07 | 460.00 |
| FC5_HOYA | 1.486014 | 1.489142 | 1.494026 |
| BSC7_HOYA | 1.515086 | 1.518719 | 1.524422 |
| FDS9_HOYA | 1.839565 | 1.855036 | 1.882227 |
| FDS90_HOYA | 1.839557 | 1.855048 | 1.882330 |
| BACD16_HOYA | 1.618237 | 1.622862 | 1.630197 |
| FD60_HOYA | 1.798849 | 1.812631 | 1.836802 |
| NBFD15_HOYA | 1.801166 | 1.811837 | 1.829942 |
| 492000.572000 | 1.490193 | 1.494050 | 1.500226 |
| 492000.572000 | 1.490193 | 1.494050 | 1.500226 |
| 492000.572000 | 1.490193 | 1.494050 | 1.500226 |
| NBFD11_HOYA | 1.782176 | 1.790150 | 1.803176 |
| 585000.300000 | 1.581055 | 1.589610 | 1.604296 |
| 530000.558000 | 1.528009 | 1.532263 | 1.539099 |

### INFINITE CONJUGATES

| | |
|---|---|
| EFL | -8.0684 |
| BFL | -379.4730 |
| FFL | -2.5970 |
| FNO | 0.0000 |

### AT USED CONJUGATES

| | |
|---|---|
| RED | -40.4490 |
| FNO | -101.1224 |
| OBJ DIS | 2.7964 |
| TT | 675.5649 |
| IMG DIS | 0.0000 |
| OAL | 672.7685 |

### PARAXIAL IMAGE

| | |
|---|---|
| HT | 134.2905 |
| THI | -53.1149 |
| ANG | 0.0000 |

### ENTRANCE PUPIL

| | |
|---|---|
| DIA | 0.4082E+10 |
| THI | 0.1000E+11 |

### EXIT PUPIL

| | |
|---|---|
| DIA | 3.2939 |
| THI | -379.4730 |

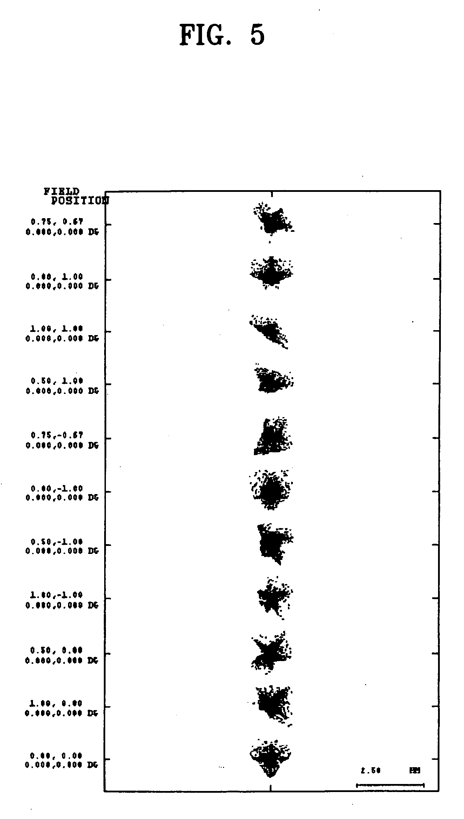

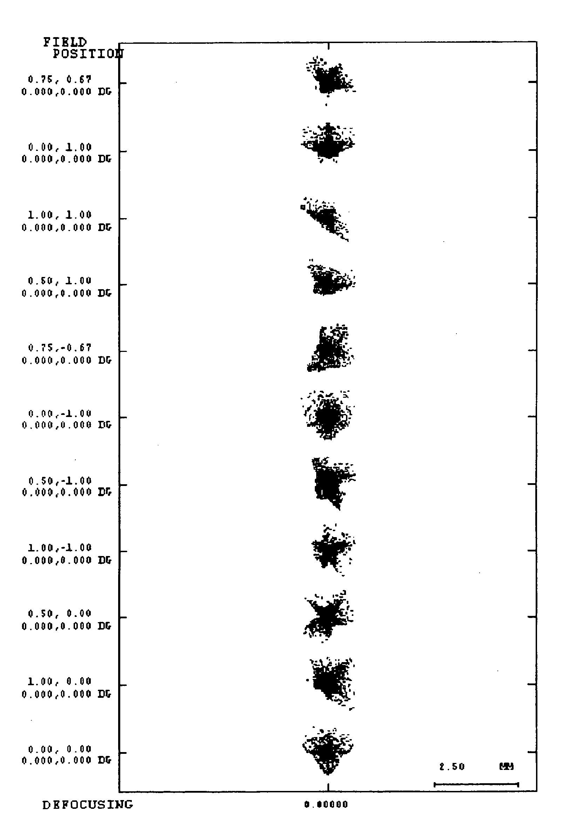

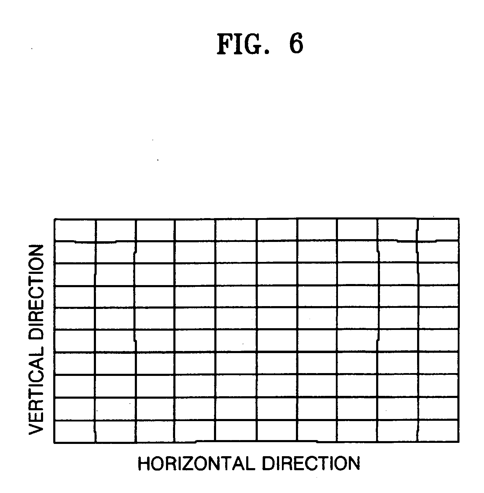

Figures 5 and 6 illustrate a distribution of light spots at given field positions and image distortions exhibited by an image display apparatus according to an embodiment of the invention. As illustrated in Figure 6, image display apparatuses according to various embodiments of the invention exhibit good image quality. The use of refractive and reflective optical systems efficiently achieve a wide viewing angle, thereby providing the image display apparatus with a reduced thickness compared to a thickness of a conventional image display apparatus having a screen of comparable size.

In the embodiments described above, optical projection systems and image display apparatuses include refractive and reflective optical systems to project an image produced by a display onto a screen with a wide viewing angle, thereby reducing a thickness of the image display apparatus. The optical projection system and the image display apparatus also generate predistortions, through a relay lens group and/or the refractive optical system, to compensate for distortion caused by the reflective optical system, thereby providing high quality images.

Although a few embodiments of the invention have been shown and described, it will be appreciated by those skilled in the art that changes may be made in these embodiments without departing from the invention, the scope of which is defined in the appended claims.

## Claims

1. An optical projection system (150), comprising:
optical means (110, 130), arranged to receive a first image and to produce a second image from said first image; and
a reflector (140) arranged to reflect the second image to a screen, wherein said optical means (110, 130) is configured to generate a distortion in the second image to compensate for further distortions resulting from the reflection of the second image by said reflector (140), **characterised by**
the optical means comprising a relay lens group (110) configured to generate an intermediate image having a first distortion from the first image and a projection lens group (130) configured to enlarge and project the intermediate image to thereby generate said second image, said projection lens group (130) being configured to generate a second distortion in said second image, the relay lens relay group and the projection lens group being configured to generate the first and the second distortions such that they in combination compensate for the further distortion resulting from the reflection of the second image by said reflector (140).

2. The optical projection system of claim 1, wherein the reflector (140) comprises an aspherical mirror.

3. The optical projection system of claim 1 or 2, wherein the reflector (140) has a negative refractive power.

4. The optical projection system of claim 1, further comprising:
first and second optical path changers (M2, M3) to change optical paths between the relay lens group (110) and the projection lens group (130) and between the projection lens group and the reflector (140), respectively.

5. The optical projection system of claim 4, further comprising:
a third optical path changer (M1) disposed within the relay lens group (110).

6. The optical projection system of claim 4, wherein the first, second, and third optical path changers (M1, M2, M3) comprise one of a mirror and a total reflection prism.

7. The optical projection system of any one of claims 2 to 6, wherein the first and second distortions are spool distortions, and the further distortion caused by the reflector (140) is a barrel distortion.

8. The optical projection system of claim 1, wherein the projection lens group (130) performs a first enlarging operation on the image and the reflector (140) performs a second enlarging operation on the image.

9. The optical projection system of claim 1, wherein the projection lens group (130) is configured to enlarge the image by a first angle and provide the enlarged image to the reflector (140) at the first angle, and the reflector is arranged to enlarge the image by a second angle to be directed onto the screen for viewing at the second angle.

10. The optical projection system of claim 1, wherein the intermediate image and the second image have a pincushion shape, and the reflection of the second image by the reflector (140) generates a reflected image in which the further distortion has a barrel shape.

11. The system of claim 1, wherein the reflected image is enlarged from the second intermediate image.

12. An image display apparatus comprising:
an optical projection system (150) according to any one of claims 1 to 11; and
image creation means (100) arranged to generate said first image.

13. An image display apparatus according to claim 12, further comprising a screen (S) for displaying the image reflected from the reflector (140).

14. An image display apparatus according to claim 12, wherein an optical axis of the image creation means (100) is coaxial with optical axes of the relay lens group (110) and the projection lens group (130).

15. An image display apparatus of claim 14, wherein an optical axis of the reflector is offset from the optical axis of the image creation means (100).

16. An image display apparatus of claim 13, further comprising:
a total reflection prism (105) disposed between the image creation means (100) and the relay lens group (110) to receive the image created by the image creation means (100) and to reflect the received image to the relay lens group (110).

17. An image display apparatus of claim 16, further comprising:
a series of reflectors (M1, M2, M3) to bend an optical path of the image through the optical projection system (150) such that, in normal use, the relay lens group (110) and the projection lens group (130) are arranged below the screen (S) and the reflector (140) is arranged behind a lower portion of the screen (S).

18. An image display apparatus of claim 13, wherein the optical means (110, 130) is configured to receive the created image in an opposite direction from the screen (S) and to provide the second image toward a rear direction of the image display apparatus, and the reflector (140) is arranged to reflect the enlarged image back toward a forward direction of the image display apparatus onto the screen (S).

19. An image display apparatus according to claim 18, wherein the image creation means (100) is disposed under the screen at the front side of the image display apparatus to create an image having a plurality of light beams and to transmit the plurality of light beams in a rear direction;

20. A method of projecting an optical image comprising:
receiving a first image created by an image creation unit (100);
producing a second image from said first image; and
reflecting the second image onto a screen (S) by a reflector (140), wherein
producing the second image comprises generating a distortion in the second image to compensate for a further distortion resulting from the reflection of the second image by said reflector (140), **characterised in that**
producing said second image comprises generating an intermediate image from the first image using a relay lens group (110), the intermediate image having a first distortion, and generating the second image by enlarging and projecting the intermediate image using projection lens group (130), said projecting lens group (130) being configured to generate a second distortion in said second image, the first distortion and the second distortion being used in combination to compensate for the further distortion arising from the reflection of the second image by said reflector (140).

21. The method of claim 20, wherein the first and the second distortions comprise one or more spool distortions and the further distortion comprises a barrel distortion.

## Patentansprüche

1. Optisches Projektionssystem (150), das umfasst:
eine optische Einrichtung (110, 130), die so eingerichtet ist, dass sie ein erstes Bild empfängt und aus dem ersten Bild ein zweites Bild produziert; und
einen Reflektor (140), der so eingerichtet ist, dass er das zweite Bild auf einen Bildschirm reflektiert, wobei die optische Einrichtung (110, 130) so konfiguriert ist, dass sie eine Verzeichnung in dem zweiten Bild erzeugt, um weitere Verzeichnungen auszugleichen, die aus der Reflektion des zweiten Bildes durch den Reflektor (140) resultieren, **dadurch gekennzeichnet, dass**
die optische Einrichtung eine Relais-Linsengruppe (110), die so konfiguriert ist, dass sie ein Zwischenbild mit einer ersten Verzeichnung aus dem ersten Bild erzeugt, und eine Projektions-Linsengruppe (130) umfasst, die so konfiguriert ist, dass sie das Zwischenbild vergrößert und projiziert und so das zweite Bild erzeugt, wobei die Projektions-Linsengruppe (130) so konfiguriert ist, dass sie eine zweite Verzeichnung in dem zweiten Bild erzeugt, und die Relais-Linsengruppe sowie die Projektions-Linsengruppe so konfiguriert sind, dass sie die erste und die zweite Verzeichnung so erzeugen, dass sie in Kombination die weitere Verzeichnung kompensieren, die aus der Reflektion des zweiten Bildes durch den Reflektor (140) resultiert.

2. Optisches Projektionssystem nach Anspruch 1, wobei der Reflektor (140) einen asphärischen Spiegel umfasst.

3. Optisches Projektionssystem nach Anspruch 1 oder 2, wobei der Reflektor (140) eine negative Brechkraft aufweist.

4. Optisches Projektionssystem nach Anspruch 1, das des Weiteren umfasst:
eine erste und eine zweite Lichtweg-Änderungseinrichtung (M2, M3), die Lichtwege zwischen der Relais-Linsengruppe (110) und der Projektions-Linsengruppe (130) bzw. zwischen der Projektions-Linsengruppe und dem Reflektor (140) ändern.

5. Optisches Projektionssystem nach Anspruch 4, das des Weiteren umfasst:
eine dritte Lichtweg-Änderungseinrichtung (M1), die innerhalb der Relais-Linsengruppe (110) angeordnet ist.

6. Optisches Projektionssystem nach Anspruch 4, wobei die erste, die zweite und die dritte Lichtweg-Änderungseinrichtungen (M1, M2, M3) einen Spiegel oder ein Totalreflektionsprisma umfassen.

7. Optisches Projektionssystem nach einem der Ansprüche 2 bis 6, wobei die erste und die zweite Verzeichnung Kissenverzeichnungen sind und die durch den Reflektor (140) verursachte weitere Verzeichnung eine Tonnenverzeichnung ist.

8. Optisches Projektionssystem nach Anspruch 1, wobei die Projektions-Linsengruppe (130) einen ersten Vergrößerungsvorgang an dem Bild durchführt und der Reflektor (140) einen zweiten Vergrößerungsvorgang an dem Bild durchführt.

9. Optisches Projektionssystem nach Anspruch 1, wobei die Projektions-Linsengruppe (130) so konfiguriert ist, dass sie das Bild um einen ersten Winkel vergrößert und das vergrößerte Bild dem Reflektor (140) in dem ersten Winkel zuführt, und der Reflektor so eingerichtet ist, dass er das Bild um einen zweiten Winkel vergrößert und es in dem zweiten Winkel auf dem Bildschirm zum Betrachten gerichtet wird.

10. Optisches Projektionssystem nach Anspruch 1, wobei das Zwischenbild und das zweite Bild eine Kissenform haben und die Reflektion des zweiten Bildes durch den Reflektor (140) ein reflektiertes Bild erzeugt, bei dem die weitere Verzeichnung eine Tonnenform hat.

11. System nach Anspruch 1, wobei das reflektierte Bild von dem zweiten Zwischenbild aus vergrößert wird.

12. Bildanzeigevorrichtung, die umfasst:
ein optisches Projektionssystem (150) nach einem der Ansprüche 1 bis 11; und
eine Bilderzeugungseinrichtung (100), die so eingerichtet ist, dass sie das erste Bild erzeugt.

13. Bildanzeigevorrichtung nach Anspruch 12, die des Weiteren einen Bildschirm (S) zum Anzeigen des von dem Reflektor (140) reflektierten Bildes umfasst.

14. Bildanzeigevorrichtung nach Anspruch 12, wobei eine optische Achse der Bilderzeugungseinrichtung (100) koaxial zu optischen Achsen der Relais-Linsengruppe (110) und der Projektions-Linsengruppe (130) ist.

15. Bildanzeigevorrichtung nach Anspruch 14, wobei eine optische Achse des Reflektors gegenüber der optischen Achse der Bilderzeugungseinrichtung (100) versetzt ist.

16. Bildanzeigevorrichtung nach Anspruch 13, die des Weiteren umfasst:
ein Totalreflektionsprisma (105), das zwischen der Bilderzeugungseinrichtung (100) und der Relais-Linsengruppe (110) angeordnet ist, um das durch die Bilderzeugungseinrichtung (100) erzeugte Bild zu empfangen und das empfangene Bild zu der Relais-Linsengruppe (110) zu reflektieren.

17. Bildanzeigevorrichtung nach Anspruch 16, die des Weiteren umfasst:
eine Reihe von Reflektoren (M1, M2, M3), die einen Lichtweg des Bildes durch das optische Projektionssystem (150) so biegen, dass im normalen Gebrauch die Relais-Linsengruppe (110) und die Projektions-Linsengruppe (130) unterhalb des Bildschirms (S) angeordnet sind und der Reflektor (140) hinter einem unteren Abschnitt des Bildschirms (S) angeordnet ist.

18. Bildanzeigevorrichtung nach Anspruch 13, wobei die optische Einrichtung (110, 130) so konfiguriert ist, dass sie das erzeugte Bild in einer zu dem Bildschirm (S) entgegengesetzten Richtung empfängt und das zweite Bild in einer Rückwärtsrichtung der Bildanzeigevorrichtung leitet und der Reflektor (140) so eingerichtet ist, dass er das vergrößerte Bild in einer Vorwärtsrichtung der Bildanzeigevorrichtung auf dem Bildschirm (S) zurückreflektiert.

19. Bildanzeigevorrichtung nach Anspruch 18, wobei die Bilderzeugungseinrichtung (100) unter dem Bildschirm an der Vorderseite der Bildanzeigevorrichtung angeordnet ist, um ein Bild mit einer Vielzahl von Lichtstrahlen zu erzeugen und die Vielzahl von Lichtstrahlen in einer Rückwärtsrichtung durchzulassen.

20. Verfahren zum Projizieren eines optischen Bildes, das umfasst:
Empfangen eines durch eine Bilderzeugungseinheit (100) erzeugten ersten Bildes; Produzieren eines zweiten Bildes aus dem ersten Bild; und
Reflektieren des zweiten Bildes auf einen Bildschirm (S) durch einen Reflektor (140), wobei
Produzieren des zweiten Bildes Erzeugen einer Verzeichnung in dem zweiten Bild umfasst, um eine weitere Verzeichnung, die aus der Reflektion des zweiten Bildes durch den Reflektor (140) resultiert, auszugleichen, **dadurch gekennzeichnet, dass**
Produzieren des zweiten Bildes Erzeugen eines Zwischenbildes aus dem ersten Bild unter Verwendung einer Relais-Linsengruppe (110), umfasst, wobei das Zwischenbild eine erste Verzeichnung aufweist, sowie Erzeugen des zweiten Bildes durch Vergrößern und Projizieren des Zwischenbildes unter Verwendung einer Projektions-Linsengruppe (130), wobei die Projektions-Linsengruppe (130) so konfiguriert ist, dass sie eine zweite Verzeichnung in dem zweiten Bild erzeugt, und die erste Verzeichnung sowie die zweite Verzeichnung in Kombination verwendet werden, um die weitere Verzerrung auszugleichen, die aus der Reflektion des zweiten Bildes durch den Reflektor (140) entsteht.

21. Verfahren nach Anspruch 20, wobei die erste und die zweite Verzeichnung eine oder mehrere Kissenverzeichnung/en umfassen und die weitere Verzeichnung eine Tonnenverzeichnung umfasst.

## Revendications

1. Système de projection optique (150), comprenant :
des moyens optiques (110, 130), agencés pour recevoir une première image et pour produire une seconde image à partir de ladite première image ; et
un réflecteur (140) agencé pour réfléchir la seconde image sur un écran, dans lequel lesdits moyens optiques (110, 130) sont configurés pour générer une déformation dans la seconde image pour compenser d'autres déformations résultant de la réflexion de la seconde image par ledit réflecteur (140), **caractérisé en ce que**
les moyens optiques comprennent un groupe de lentilles de relais (110) configuré pour générer une image intermédiaire ayant une première déformation à partir de la première image et un groupe de lentilles de projection (130) configuré pour agrandir et projeter l'image intermédiaire pour générer ainsi ladite seconde image, ledit groupe de lentilles de projection (130) étant configuré pour générer une seconde déformation dans ladite seconde image, le groupe de lentilles de relais et le groupe de lentilles de projection étant configurés pour générer les première et seconde déformations de sorte à compenser en combinaison l'autre déformation résultant de la réflexion de la seconde image par ledit réflecteur (140).

2. Système de projection optique selon la revendication 1, dans lequel le réflecteur (140) comprend un miroir asphérique.

3. Système de projection optique selon la revendication 1 ou 2, dans lequel le réflecteur (140) a une puissance de réfraction négative.

4. Système de projection optique selon la revendication 1, comprenant en outre :
des premier et deuxième modificateurs de trajet optique (M2, M3) pour modifier les trajets optiques entre le groupe de lentilles de relais (110) et le groupe de lentilles de projection (130) et entre le groupe de lentilles de projection et le réflecteur (140), respectivement.

5. Système de projection optique selon la revendication 4, comprenant en outre :
un troisième modificateur de trajet optique (M1) disposé au sein du groupe de lentilles de relais (110).

6. Système de projection optique selon la revendication 4, dans lequel les premier, deuxième et troisième modificateurs de trajet optique (M1, M2, M3) comprennent un d'un miroir et d'un prisme à réflexion totale.

7. Système de projection optique selon l'une quelconque des revendications 2 à 6, dans lequel les première et seconde déformations sont des déformations en bobine, et l'autre déformation causée par le réflecteur (140) est une déformation en barillet.

8. Système de projection optique selon la revendication 1, dans lequel le groupe de lentilles de projection (130) effectue une première opération d'agrandissement sur l'image et le réflecteur (140) effectue une seconde opération d'agrandissement sur l'image.

9. Système de projection optique selon la revendication 1, dans lequel le groupe de lentilles de projection (130) est configuré pour agrandir l'image selon un premier angle et pour fournir l'image agrandie au réflecteur (140) au premier angle, et le réflecteur est agencé pour agrandir l'image selon un second angle devant être orienté sur l'écran pour visualisation au second angle.

10. Système de projection optique selon la revendication 1, dans lequel l'image intermédiaire et la seconde image ont une forme en coussin, et la réflexion de la seconde image par le réflecteur (140) génère une image réfléchie dans laquelle l'autre déformation a une forme en barillet.

11. Système selon la revendication 1, dans lequel l'image réfléchie est agrandie par rapport à la seconde image intermédiaire.

12. Dispositif d'affichage d'image comprenant :
un système de projection optique (150) selon l'une quelconque des revendications 1 à 11 ; et
des moyens de création d'image (100) agencés pour générer ladite première image.

13. Dispositif d'affichage d'images selon la revendication 12, comprenant en outre un écran (S) pour afficher l'image réfléchie par le réflecteur (140).

14. Dispositif d'affichage d'images selon la revendication 12, dans lequel un axe optique des moyens de création d'image (100) est coaxial avec les axes optiques du groupe de lentilles de relais (110) et du groupe de lentilles de projection (130).

15. Dispositif d'affichage d'images selon la revendication 14, dans lequel un axe optique du réflecteur est décalé par rapport à l'axe optique des moyens de création d'image (100).

16. Dispositif d'affichage d'images selon la revendication 13, comprenant en outre :
un prisme à réflexion totale (105) disposé entre les moyens de création d'image (100) et le groupe de lentilles de relais (110) pour recevoir l'image créée par les moyens de création d'image (100) et pour réfléchir l'image reçue vers le groupe de lentille de relais (110).

17. Dispositif d'affichage d'images selon la revendication 16, comprenant en outre :
une série de réflecteurs (M1, M2, M3) pour courber un trajet optique de l'image à travers le système de projection optique (150) de telle sorte que, lors d'une utilisation normale, le groupe de lentilles de relais (110) et le groupe de lentilles de projection (130) sont agencés en dessous de l'écran (S) et le réflecteur (140) est agencé derrière une partie inférieure de l'écran (S).

18. Dispositif d'affichage d'images selon la revendication 13, dans lequel les moyens optiques (110, 130) sont configurés pour recevoir l'image créée dans une direction opposée de l'écran (S) et pour fournir la seconde image vers une direction arrière du dispositif d'affichage d'images, et le réflecteur (140) est agencé pour renvoyer l'image agrandie vers une direction avant du dispositif d'affichage d'images sur l'écran (S).

19. Dispositif d'affichage d'images selon la revendication 18, dans lequel les moyens de création d'image (100) sont disposés sous l'écran sur le côté avant du dispositif d'affichage d'images pour créer une image ayant une pluralité de faisceaux lumineux et pour transmettre la pluralité de faisceaux lumineux dans une direction arrière.

20. Procédé de projection d'une image optique, consistant à :
recevoir une première image créée par une unité de création d'image (100) ;
produire une seconde image à partir de ladite première image ; et
réfléchir la seconde image sur un écran (S) au moyen d'un réflecteur (140), dans lequel
produire la seconde image consiste à générer une déformation dans la seconde image pour compenser une autre déformation résultant de la réflexion de la seconde image par ledit réflecteur (140), **caractérisé en ce que**
produire ladite seconde image consiste à générer une image intermédiaire à partir de la première image en utilisant un groupe de lentilles de relais (110), l'image intermédiaire ayant une première déformation, et générer la seconde image en agrandissant et projetant l'image intermédiaire en utilisant un groupe de lentilles de projection (130), ledit groupe de lentilles de projection (130) étant configuré pour générer une seconde déformation dans ladite seconde image, la première déformation et la seconde déformation étant utilisées en combinaison pour compenser l'autre déformation résultant de la réflexion de la seconde image par ledit réflecteur (140).

21. Procédé selon la revendication 20, dans lequel les première et seconde déformations comprennent une ou plusieurs déformations en bobine et l'autre déformation comprend une déformation en barillet.
